# EUROPEAN PATENT SPECIFICATION

(11) **EP 2 584 014 B1**
(45) Date of publication and mention of the grant of the patent: **20.05.2020**
(21) Application number: 12162699.8
(22) Date of filing: 30.03.2012
(51) Int. Cl.: C09J 5/02, B32B 7/12

(54) **METHOD FOR JOINING ALUMINUM PART AND RESIN AND COMPOSITE MADE BY SAME**
VERFAHREN ZUM ANSCHLIESSEN EINES ALUMINIUMTEILS UND HARZ UND VERBUNDSTOFF DARAUS
PROCÉDÉ DE LIAISON D'UNE PIÈCE EN ALUMINIUM ET D'UNE RÉSINE ET COMPOSITE AINSI FABRIQUÉ

(30) Priority: 21.10.2011 CN 201110322709
(43) Date of publication of application: 24.04.2013
(73) Proprietor: Shenzhen Futaihong Precision Industry Co., Ltd., Shenzhen City, Guangdong Province 518109 (CN); FIH (Hong Kong) Limited, Cheung Sha Wan Kowloon, Hong Kong (CN)
(72) Inventor: Zhou, Shu-Xiang, Shenzhen City, Guangdong Province (CN); Xu, Qiu-Jiang, Shenzhen City, Guangdong Province (CN); Wang, Hong-Liang, Shenzhen City, Guangdong Province (CN)
(74) Representative: CMS Cameron McKenna Nabarro Olswang LLP

(56) References cited:
- US-A- 5 728 203
- US-A1- 2009 202 840

## Description

### Field

The present disclosure relates to a method for joining aluminum parts and resin and aluminum-resin composites made by the method.

### BackGround

A typical method for joining metal parts (such as aluminum alloy parts) and resin includes coating a heat-sensitive adhesive layer on surfaces of the metal parts. Then, the resin is injected to bond with the surfaces having the adhesive layer of the metal parts by insert molding. However, due to having high chemical activity, surfaces of the aluminum parts are easily oxidized to form oxide aluminum films. The oxide aluminum films have a relatively low chemical activity, resisting joining with the resin. Thus, the bonding strength between the aluminum part and the molded resin is low.

Therefore, there is room for improvement within the art.

Document US 2009/202840 discloses a method wherein a metal that can be aluminum is treated with a bonding agent on which a plastic material is finally injection molded.

### Summary

According to one aspect of the disclosure, a method for joining an aluminum part and resin is provided. The method includes: providing an aluminum part made of aluminum or aluminum alloy; forming a bonding layer on a surface of the aluminum part by coating a liquid film of hydrolyzed silane coupling agent prepared a described in claim 1 and drying the liquid film; forming an adhesive layer formed of polyurethane adhesive on the bonding layer and curing the adhesive layer; molding a resin part integrally bonded to the adhesive layer.

According to another aspect of the disclosure, an aluminum-resin composite as disclosed in claim 10 is provided. The aluminum-resin composite includes an aluminum part made of aluminum or aluminum alloy, a bonding layer formed on a surface of the aluminum part, an adhesive layer formed on the bonding layer, and a resin part integrally bonded to the adhesive layer.

The bonding layer is formed by coating a liquid film of hydrolyzed silane coupling agent on the surface of the aluminum part and drying the liquid film. The adhesive layer is formed of polyurethane adhesive,.

### BRIEF DESCRIPTION OF THE DRAWINGS

Many aspects of the disclosure can be better understood with reference to the following figures. The components in the figures are not necessarily drawn to scale, the emphasis instead being placed upon clearly illustrating the principles of the disclosure. Moreover, in the drawings like reference numerals designate corresponding parts throughout the several views.

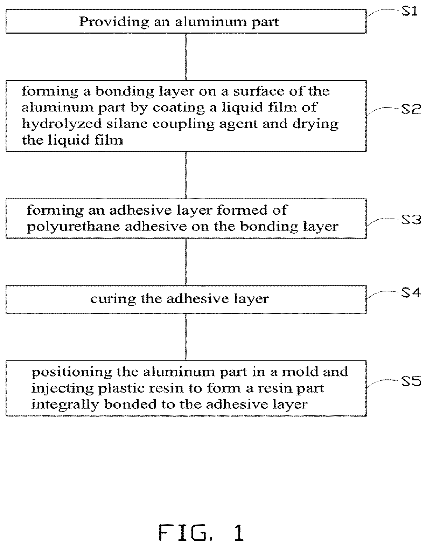

FIG. 1 is a block diagram of a process for joining an aluminum part and resin.
FIG. 2 is a cross-sectional schematic view of an exemplary embodiment of an aluminum-resin composite made by the present method.

### DETAILED DESCRIPTION

In step S1, an aluminum part 11 formed of aluminum or aluminum alloy is provided. The aluminum part 11 may be formed by punching and have a desired shape. In step S2, the aluminum part 11 is pretreated. The pretreatment is carried out by coating a liquid film of hydrolyzed silane coupling agent on a surface 110 of the aluminum part 11. Then the liquid film is dried and solidified, forming a bonding layer 12. The hydrolyzed silane coupling agent is prepared by blending a silane coupling agent containing epoxy groups and alcohol (such as industrial alcohol) having a concentration of about 95 weight percent, with the silane coupling agent having a mass percentage of about 1% to about 6%. Then, the silane coupling agent and the alcohol may be stirred to obtain a uniform mixture.

The mixture is maintained static until the silane coupling agent is fully hydrolyzed. It may take about 25 minutes to about 35 minutes for full hydrolysis of the silane coupling agent. The silane coupling agent may be represented by the following chemical formula:

R'-Si-R₃

wherein R is an alkoxyl having 1 to 5 carbon atoms. The subscript '3' is the number of R. R' is an alkyl having an epoxy group. The R' may be an alkyl having a 3,4-epoxy-cyclohexyl group. Accordingly, the silane coupling agent may be 2-(3,4-epoxy-cyclohexyl) ethyltrimethoxysilane, 3-(3,4-epoxy-cyclohexyl) propyltrimethoxysilane, or 4-(3,4-epoxy-cyclohexyl) butyltrimethoxysilane, for example. In the embodiment, the silane coupling agent is 2-(3,4-epoxy-cyclohexyl) ethyltrimethoxysilane.

After being hydrolyzed, the three alkoxyl groups are hydrolyzed to be three hydroxyl groups. Each molecule of the silane coupling agent has three hydroxyl groups after being hydrolyzed. Hydrolysis catalyst, such as a modified platinum catalyst may be added into the mixture, accelerating the hydrolysis of the silane coupling agent.

The hydrolyzed silane coupling agent is uniformly coated on the surface 110 of the aluminum part 11 by, for example spraying, forming the liquid film thereon. The aluminum part 11 having the liquid film may be dried under a temperature of about 100 °C to about 120 °C for about 4 minutes to about 8 minutes. The liquid film fully reacts with the aluminum part 11 and forms the bonding layer 12 when dried. During the drying, the hydroxyl groups of the hydrolyzed silane coupling agent react with hydroxyl groups existing on the surface 110 of the aluminum part 11, forming dense Si-O-M (M represents a metal atom) bonds dispersed on the surface 110 of the aluminum part 11. The bonding layer 12 bonds the aluminum part 11 via the Si-O-M bonds.

In step S3, after being cooled, the pretreated aluminum part 11 with the bonding layer 12 is coated with an adhesive layer 13. The adhesive layer 13 may be directly formed on the bonding layer 12. The adhesive layer 13 is formed of polyurethane adhesive which has urethane (-NHCOO-) groups within its molecular chains.

In step S4, the adhesive layer 13 is cured. During the curing process, active groups (such as epoxy groups) on molecular chains of the bonding layer 12 may react with active groups (such as urethane groups) within the adhesive layer 13, thereby bonding the adhesive layer 13 and the aluminum part 11 via inter-molecular forces. The inter-molecular forces provide a strong bonding strength between the adhesive layer 13 and the aluminum part 11.

In step S5, the aluminum part 11 having the bonding layer 12 and the adhesive layer 13 is located in a injection mold (not shown), and molten resin is injected into the injection mold to cover and bond the adhesive layer 13, and finally form resin parts 15 when hardened. As such, an aluminum-resin composite 10 is formed. The molten resin is thermoplastic resin, such as polyphenylene sulfide (PPS), polyamide (PA), or polyethylene terephthalate (PET).

Proved by experiments, with other factors unchanged, when the hydrolyzed silane coupling agent is prepared by mixing the alcohol and the silane coupling agent with the silane coupling agent under a mass percentage of about 3%, the obtained aluminum-resin composite 10 has the largest bonding strength between the aluminum part 11 and the resin parts 15. When the hydrolyzed silane coupling agent is prepared by mixing the alcohol and the silane coupling agent with the silane coupling agent having a mass percentage more than about 6%, the bonding strength between the aluminum part 11 and the resin parts 15 decreases about 20% to about 30% relative to the largest bonding strength.

The composite 10 manufactured by the present process can resist a drawing force of more than 200 N.

The method for joining an aluminum part and resin may further include degreasing the aluminum part 11 before the pretreatment step.

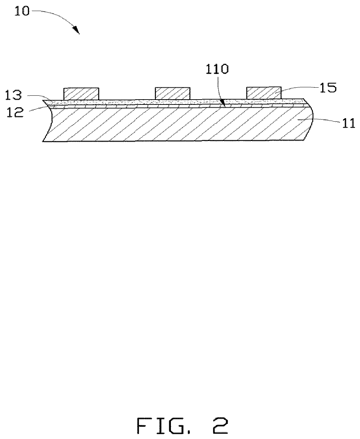

Referring to FIG. 2, the composite 10 manufactured by the present process includes the aluminum part 11 having a desired shape, the bonding layer 12 formed on the aluminum part 11, the adhesive layer 13 formed on the bonding layer 12, and the resin parts 15 integrally bonded to the adhesive layer 13.

The bonding layer 12 is formed by coating a liquid film of hydrolyzed silane coupling agent on the surface 110 of the aluminum part 11 and drying the liquid film. The bonding layer 12 bonds the the aluminum part 11 through Si-O-M (M represents a metal atom) bonds. The silane coupling agent may be represented by the chemical formula of R'-Si-R₃, wherein R is an alkoxyl having 1 to 5 carbon atoms. The subscript '3' is the number of R. R' is an alkyl having an epoxy group. The adhesive layer 13 is formed of polyurethane adhesive.

The resin parts 15 are formed by injection molding. The resin parts 15 may be formed of thermoplastic resin, such as PPS, PA, or PET.

## Claims

1. A method for joining an aluminum part and resin, comprising:
providing an aluminum part made of aluminum or aluminum alloy;
forming a bonding layer on a surface of the aluminum part by coating a liquid film of hydrolyzed silane coupling agent on the surface of the aluminum part and drying the liquid film;
forming an adhesive layer formed of polyurethane adhesive on the bonding layer;
curing the adhesive layer;
positioning the aluminum part having the bonding layer and the adhesive layer in a injection mold; and
injecting thermoplastic resin on the adhesive layer to form a resin part integrally bonded to the adhesive layer when hardened;
wherein the hydrolyzed silane coupling agent is prepared by blending a silane coupling agent containing epoxy groups and alcohol having a concentration of 95 weight percent to obtain a mixture, with the silane coupling agent having a mass percentage of 1% to 6%, and maintaining the mixture static until the silane coupling agent is fully hydrolyzed.

2. The method as claimed in claim 1, wherein the mixture is maintained static for 25 minutes to 35 minutes.

3. The method as claimed in claim1, wherein silane coupling agent is represented by the chemical formula of R'-Si-R₃, wherein R is an alkoxyl having 1 to 5 carbon atoms, R' is an alkyl having an epoxy group.

4. The method as claimed in claim 3, wherein the R' is an alkyl having a 3,4-epoxy-cyclohexyl group.

5. The method as claimed in claim 4, wherein the silane coupling agent is one selected from a group consisting of 2-(3,4-epoxy-cyclohexyl) ethyltrimethoxysilane, 3-(3,4-epoxy-cyclohexyl) propyltrimethoxysilane, or 4-(3,4-epoxy-cyclohexyl) butyltrimethoxysilane.

6. The method as claimed in claim 1, wherein the step of drying the liquid film is carried out at a temperature of 100 °C to 120 °C for 4 minutes to 8 minutes.

7. The method as claimed in claim 1, wherein during the step of drying the liquid film, the hydrolyzed silane coupling agent react with hydroxyl groups existing on the surface of the aluminum part, forming dense Si-O-M bonds dispersed on the surface of the aluminum part, wherein M represents a metal atom.

8. The method as claimed in claim 1, wherein the bonding layer bonds the aluminum part via the Si-O-M bonds.

9. The method as claimed in claim 1, wherein during the step of curing the adhesive layer, epoxy groups of the bonding layer react with urethane groups of the adhesive layer.

10. An aluminum-resin composite, consisting of:
an aluminum part made of aluminum or aluminum alloy;
a bonding layer formed on a surface of the aluminum part, the bonding layer formed by coating a liquid film of hydrolyzed silane coupling agent on the surface of the aluminum part and drying the liquid film, wherein the hydrolyzed silane coupling agent is prepared by blending a silane coupling agent containing epoxy groups and alcohol having a concentration of 95 weight percent to obtain a mixture, with the silane coupling agent having a mass percentage of 1% to 6%, and maintaining the mixture static until the silane coupling agent is fully hydrolyzed;
an adhesive layer formed on the bonding layer, the adhesive layer formed of polyurethane adhesive and being cured; and
a thermoplastic resin part integrally bonded to the adhesive layer through injecting.

11. The composite as claimed in claim 10, wherein the silane coupling agent is represented by the chemical formula of R'-Si-R₃, R is an alkoxyl having 1 to 5 carbon atoms, R' is an alkyl having an epoxy group.

12. The composite as claimed in claim 10, wherein the bonding layer bonds the aluminum part via Si-O-M bonds, M represents a metal atom.

13. The composite as claimed in claim 10 wherein the R' is an alkyl having a 3,4-epoxy-cyclohexyl group.

## Patentansprüche

1. Verfahren zum Verbinden eines Aluminiumteils und Harzes, Folgendes umfassend:
Bereitstellen eines Aluminiumteils, das aus Aluminium oder einer Aluminiumlegierung hergestellt ist;
Ausbilden einer Bindeschicht auf einer Oberfläche des Aluminiumteils durch Beschichten eines Flüssigkeitsfilms aus hydrolysiertem Silanhaftvermittler auf die Oberfläche des Aluminiumteils und Trocknen des Flüssigkeitsfilms;
Ausbilden einer Klebstoffschicht, die aus Polyurethanklebstoff ausgebildet ist, auf der Bindeschicht;
Aushärten der Klebstoffschicht;
Positionieren des Aluminiumteils mit der Bindeschicht und der Klebstoffschicht in einer Spritzgussform; und
Einspritzen von Thermoplast auf die Klebstoffschicht, um ein Harzteil auszubilden, das einstückig an die Klebstoffschicht gebunden ist, wenn es gehärtet ist;
wobei der hydrolysierte Silanhaftvermittler durch Vermischen eines Silanhaftvermittlers, der Epoxidgruppen und Alkohol mit einer Konzentration von 95 Gew.-% enthält, erstellt wird, um eine Mischung zu erhalten, wobei der Silanhaftvermittler ein Massenprozent von 1 % bis 6 % aufweist und die Mischung statisch aufrechterhalten wird, bis der Silanhaftvermittler vollständig hydrolysiert ist.

2. Verfahren nach Anspruch 1, wobei die Mischung 25 Minuten bis 35 Minuten lang aufrechterhalten wird.

3. Verfahren nach Anspruch 1, wobei der Silanhaftvermittler durch die chemische Formel R'-Si-R₃ dargestellt ist, wobei R ein Alkoxyl mit 1 bis 5 Kohlenstoffatomen ist, R' ein Alkyl mit einer Epoxidgruppe ist.

4. Verfahren nach Anspruch 3, wobei das R' ein Alkyl mit einer 3,4-Epoxidcyclohexylgruppe ist.

5. Verfahren nach Anspruch 4, wobei der Silanhaftvermittler eines ist, das aus einer Gruppe ausgewählt ist, die aus 2-(3,4-Epoxidcyclohexyl)ethyltrimethoxysilan, 3-(3,4-Epoxidcyclohexyl)propyltrimethoxysilan, oder 4-(3,4-Epoxidcyclohexyl)butyltrimethoxysilan besteht.

6. Verfahren nach Anspruch 1, wobei der Schritt des Trocknens des Flüssigkeitsfilms bei einer Temperatur von 100 °C bis 120 °C 4 Minuten bis 8 Minuten lang durchgeführt wird.

7. Verfahren nach Anspruch 1, wobei während des Schritts des Trocknens des Flüssigkeitsfilms der hydrolysierte Silanhaftvermittler mit an der Oberfläche des Aluminiumteils vorhandenen Hydroxylgruppen unter Ausbildung an der Oberfläche des Aluminiumteils dispergierter dichter Si-O-M-Bindungen reagiert, wobei M ein Metallatom darstellt.

8. Verfahren nach Anspruch 1, wobei die Bindeschicht das Aluminiumteil über die Si-OM-Bindungen bindet.

9. Verfahren nach Anspruch 1, wobei während des Schritts des Aushärtens der Klebstoffschicht Epoxidgruppen der Bindeschicht mit Urethangruppen der Klebstoffschicht reagieren.

10. Aluminium-Harz-Verbund, aus Folgendem bestehend:
einem Aluminiumteil, das aus Aluminium oder einer Aluminiumlegierung hergestellt ist;
einer Bindeschicht, die auf einer Oberfläche des Aluminiumteils ausgebildet ist, wobei die Bindeschicht durch Beschichten eines Flüssigkeitsfilms aus hydrolysiertem Silanhaftvermittler auf die Oberfläche des Aluminiumteils und Trocknen des Flüssigkeitsfilms ausgebildet wird, wobei der hydrolysierte Silanhaftvermittler durch Vermischen eines Silanhaftvermittlers, der Epoxidgruppen und Alkohol mit einer Konzentration von 95 Gew.-% enthält, erstellt wird, um eine Mischung zu erhalten, wobei der Silanhaftvermittler ein Massenprozent von 1 % bis 6 % aufweist und die Mischung statisch aufrechterhalten wird, bis der Silanhaftvermittler vollständig hydrolysiert ist;
einer auf der Bindeschicht, die auf der Klebstoffschicht ausgebildet ist, wobei die Klebstoffschicht aus Polyurethankleber ausgebildet ist und gehärtet wird; und
einem Thermoplast, der durch Einspritzen einstückig an die Klebstoffschicht gebunden ist.

11. Verbund nach Anspruch 10, wobei der Silanhaftvermittler durch die chemische Formel R'-Si-R₃ dargestellt ist, wobei R ein Alkoxyl mit 1 bis 5 Kohlenstoffatomen ist, R' ein Alkyl mit einer Epoxidgruppe ist.

12. Verbund nach Anspruch 10, wobei die Bindeschicht das Aluminiumteil über Si-O-M-Bindungen bindet, wobei M ein Metallatom darstellt.

13. Verbund nach Anspruch 10, wobei das R' ein Alkyl mit einer 3,4-Epoxidcyclohexylgruppe ist.

## Revendications

1. Procédé d'assemblage d'une pièce en aluminium et de résine, comprenant :
la fourniture d'une pièce en aluminium faite d'aluminium ou d'alliage d'aluminium ;
la formation d'une couche de liaison sur une surface de la pièce en aluminium en enduisant un film liquide d'agent de couplage de silane hydrolysé sur la surface de la pièce en aluminium et en séchant le film liquide ;
la formation d'une couche adhésive formée d'adhésif polyuréthane sur la couche de liaison ;
le durcissement de la couche adhésive ;
le positionnement de la pièce en aluminium possédant la couche de liaison et la couche adhésive dans un moule d'injection ; et
l'injection de la résine thermoplastique sur la couche adhésive afin de former une partie en résine liée intégralement à la couche adhésive lorsqu'elle est durcie ;
dans lequel l'agent de couplage de silane hydrolysé est préparé en mélangeant un agent de couplage de silane contenant des groupes époxy et de l'alcool ayant une concentration de 95 % en poids afin d'obtenir un mélange, l'agent de couplage de silane ayant un pourcentage massique de 1 % à 6 %, et le maintient du mélange statique jusqu'à ce que l'agent de couplage de silane soit complètement hydrolysé.

2. Procédé selon la revendication 1, dans lequel le mélange est maintenu statique pendant 25 minutes à 35 minutes.

3. Procédé selon la revendication 1, dans lequel l'agent de couplage de silane est représenté par la formule chimique de R'-Si-R₃, R étant un alcoxyle ayant 1 à 5 atomes de carbone, R' étant un alkyle ayant un groupe époxy.

4. Procédé selon la revendication 3, dans lequel le R' est un alkyle ayant un groupe 3,4-époxy-cyclohexyle.

5. Procédé selon la revendication 4, **caractérisé en ce que** l'agent de couplage de silane est choisi parmi un groupe constitué de 2-(3,4-époxy-cyclohexyl) éthyltriméthoxysilane, 3-(3,4-époxy-cyclohexyl) propyltriméthoxysilane, et de 4-(3,4-époxy-cyclohexyl) butyltriméthoxysilane.

6. Procédé selon la revendication 1, dans lequel l'étape de séchage du film liquide est réalisée à une température de 100 °C à 120 °C pendant 4 minutes à 8 minutes.

7. Procédé selon la revendication 1, dans lequel, lors de l'étape de séchage du film liquide, l'agent de couplage de silane hydrolysé réagit avec les groupes hydroxyles existant à la surface de la pièce en aluminium, formant des liaisons Si-O-M denses dispersées à la surface de la pièce en aluminium, M représentant un atome métallique.

8. Procédé selon la revendication 1, dans lequel la couche de liaison lie la pièce en aluminium par l'intermédiaire des liaisons Si-O-M.

9. Procédé selon la revendication 1, dans lequel, lors de l'étape de durcissement de la couche adhésive, les groupes époxy de la couche de liaison réagissent avec les groupes uréthanes de la couche adhésive.

10. Composite aluminium-résine, composé :
d'une pièce en aluminium faite d'aluminium ou d'alliage d'aluminium ;
d'une couche de liaison formée sur une surface de la pièce en aluminium, la couche de liaison étant formée en enduisant un film liquide d'agent de couplage de silane hydrolysé sur la surface de la pièce en aluminium et en séchant le film liquide, dans lequel l'agent de couplage de silane hydrolysé est préparé en mélangeant un agent de couplage de silane contenant des groupes époxy et de l'alcool ayant une concentration de 95 % en poids afin d'obtenir un mélange, l'agent de couplage silane ayant un pourcentage massique de 1 % à 6 %, et du maintien du mélange statique jusqu'à ce que l'agent de couplage de silane soit complètement hydrolysé ;
d'une couche adhésive formée sur la couche de liaison, la couche adhésive étant formée d'adhésif polyuréthane et étant durcie ; et
d'une partie en résine thermoplastique liée intégralement à la couche adhésive par injection.

11. Composite selon la revendication 10, dans lequel l'agent de couplage de silane est représenté par la formule chimique de R'-Si-R₃, R étant un alcoxyl ayant 1 à 5 atomes de carbone, R' étant un groupe alkyle ayant un groupe époxy.

12. Composite selon la revendication 10, dans lequel la couche de liaison lie la pièce en aluminium par l'intermédiaire des liaisons Si-O-M, M représentant un atome métallique.

13. Composite selon la revendication 10, dans lequel le R' est un alkyle ayant un groupe 3,4-époxy-cyclohexyle.
